# EUROPEAN PATENT APPLICATION

(11) **EP 2 768 271 A1**
(43) Date of publication of application: **20.08.2014**
(21) Application number: 13305175.5
(22) Date of filing: 15.02.2013
(51) Int. Cl.: H04W 76/02

(54) **Radio link establishment**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB); Brend, Graham, Swindon, Wiltshire SN5 7DJ (GB); Warner, George, Swindon, Wiltshire SN5 7DJ (GB)
(74) Representative: Coghlan, Judith Elizabeth Kensy

(57) **Abstract**

A method of establishing an association between user equipment configured to communicate with other user equipment via a direct radio link within a wireless communications network;, a computer program product and user equipment operable to perform that method. The method comprises: monitoring, at one of the user equipment configured to communicate via a direct radio link, for receipt of a beacon signal from one of the other user equipment; and if such a beacon signal is received, notifying the user equipment transmitting the received beacon signal of receipt of the beacon signal to establish an association with the user equipment transmitting the received beacon signal; and if no beacon signal is received, commencing transmission of a beacon signal and monitoring for receipt of a notification that the transmitted beacon signal has been received by one of the other user equipment to establish an association with the other user equipment responsible for transmission of that notification. Aspects and embodiments described may allow user equipment wishing to establish a device to device link with other user equipment to discover each other without each having to transmit a beacon signal.

## Description

### FIELD OF THE INVENTION

The present invention relates to a method of establishing an association between user equipment configured to communicate with other user equipment via a direct radio link within a wireless communications network; a computer program product and user equipment operable to perform that method.

### BACKGROUND

Components of a wireless telecommunications network typically include user equipment which roam through the wireless telecommunications network. Base stations, for example, eNodeBs, are provided which support areas of radio coverage. A number of such base stations are provided and are distributed geographically in order to provide a wide area of coverage to user equipment.

When user equipment is within an area of radio coverage served by a base station, communications may be established between the user equipment and the base station over associated radio links. Each base station typically supports a number of sectors within the geographical area of service.

Radio coverage within a network maybe unreliable in some circumstances which can lead to difficulties establishing communication between user equipment.

### SUMMARY

A first aspect provides a method of establishing an association between user equipment configured to communicate with other user equipment via a direct radio link within a wireless communications network; the method comprising: monitoring, at one of the user equipment configured to communicate via a direct radio link, for receipt of a beacon signal from one of the other user equipment; if such a beacon signal is received, notifying the user equipment transmitting the received beacon signal of receipt of the beacon signal to establish an association with the user equipment transmitting the received beacon signal; and if no beacon signal is received, commencing transmission of a beacon signal and monitoring for receipt of a notification that the transmitted beacon signal has been received by one of the other user equipment to establish an association with the other user equipment responsible for transmission of the notification.

The first aspect recognises that user equipment within a wireless telecommunications network are operable as transmit and receive devices and, whilst communication over radio links may be overseen most effectively by a network and associated core architecture with centralised decision making processes, there may be occasions when it can be advantageous for user equipment to be operable such that they can communicate via direct radio links. If configured to operate to communicate with other similarly configured user equipment, it will be necessary to establish such direct communication links in an efficient and minimally disruptive manner to other user equipment operating in an area. The first aspect offers a method according to which not all user equipment in an area necessarily need operate to transmit a beacon to inform other user equipment in that area of their existence. By monitoring for receipt of a beacon before transmitting their own beacon user equipment may reduce interference caused in a region and may, for example, ensure that its own battery life is conserved.

User equipment operable to perform a method in accordance with the first aspect may autonomously form clumps or clusters of user equipment all configured to operate to establish direct radio communication links. It will be appreciated that the size of such clusters may be limited by the transmission strength of a beacon signal being transmitted by user equipment. If a beacon signal is not strong enough to be successfully received by another user equipment, that user will itself begin transmitting a beacon signal in the hope of establishing a direct communication link with another user.

In one embodiment, the association comprises establishment of a direct radio link between said user equipment receiving a beacon signal and said user equipment transmitting said beacon signal. That direct radio link may, for example, comprise a radio link which is continuous, meaning that messaging is constantly being passed between the two associated user equipment, or may, for example, comprise a discontinuous radio link. For example, in some aspects and embodiments, a beacon holder may be operable to transmit a primary beacon according to a selected Discontinuous Transmission and/or Reception (DTX and DRX) cycle, *D*₁. User equipment within the group that are not beacon holders, ie which are not transmitting a beacon signal, may be operable to transmit a secondary beacon which is recognized by a beacon holder. More than one secondary beacon can be used within a group. The secondary beacon may be transmitted at a lower rate with a selected DRX cycle *D*₂. where *D*₂ > *D*₁. Such a secondary beacon may be used by the beacon holder to determine whether to maintain or discard non-beacon holder user equipment within an existing D2D group. Transmission of beacons using discontinuous transmit or receive cycles may help conserve the battery life of user equipment operable to transmit a beacon.

In one embodiment, an association comprises membership of a user equipment cluster list maintained by said user equipment transmitting said beacon signal, said cluster list comprising a list of user equipment with which said user equipment transmitting said beacon signal has a direct radio link. Accordingly user equipment, on discovery of user equipment transmitting a beacon signal, may essentially discover the presence of all other user equipment with which a beacon signal holding user has associations. There may, therefore, be no need for a user to maintain a direct link with all other user equipment in a region autonomously, since a beacon holder may be operable to instruct user equipment with which it is already associated to create a direct link therebetween, or to act as a relay for direct communication between two users associated via a user transmitting a beacon signal. Similarly, a user transmitting a beacon signal may maintain a cluster list so that it can operate as a key, or control, node within a network in which user devices have been configured to operate in a device to device communication mode.

In one embodiment, the cluster list further comprises information regarding user equipment within the cluster. Such information may, for example, include: UE ID, UE path loss and other similar parameters.

In one embodiment, the method further comprises: exchanging an indicator of radio condition of the established direct radio link between the user equipment receiving a beacon signal and the user equipment transmitting the beacon signal. Accordingly, by monitoring or assessing information regarding an established direct radio link, it is possible for user equipment to perform further actions in relation to maintenance of an association between two user equipment. The exchange may comprise a non-beacon user transmitting an indicator of path loss to the user equipment transmitting a beacon signal. The exchange may comprise user equipment transmitting a beacon signal receiving an indicator of path loss being experienced by a non-beacon user.

In one embodiment, if the indicator of radio condition of the established direct radio link between the user equipment receiving a beacon signal and the user equipment transmitting the beacon signal meets edge criteria, the user equipment receiving a beacon signal is instructed by the user equipment transmitting the beacon signal to commence transmission of its own beacon signal. Accordingly,

In one embodiment, the method further comprises: determining whether an indicator of radio condition fails to meet link maintenance criteria, and if not, terminating the established association between the user equipment receiving a beacon signal and the user equipment transmitting the beacon signal. Termination of an association may leave user equipment unable to receive a beacon signal. Such a non-beacon signal user may then be operable to commence transmission of a beacon signal and establish a new set or cluster of device to device communication capable user equipment.

In one embodiment, the method further comprises: determining whether an indicator of radio condition fails to meet link maintenance criteria, and if not, determining that user equipment is receiving said beacon signal from one of said other user equipment at strength indicative of reaching an edge of beacon signal coverage, and commencing transmission of a beacon signal.

In one embodiment, user equipment transmitting a beacon signal may instruct user equipment with which it has an association to commence transmitting a beacon signal. Accordingly, a beacon holder running out of battery power or wishing to exit device to device communication mode made ensure that device to device functionality maybe efficiently maintained within a region of a network.

In one embodiment, direct radio link communication between user equipment configured to communicate with other user equipment via a direct radio link within a cluster list maintained by said user equipment transmitting said beacon signal is routed between user equipment within said cluster list via said user equipment transmitting said beacon signal. Accordingly, user equipment transmitting a beacon signal may maintain a direct link with each user equipment in its cluster list and user equipment within a cluster list may contact one another via messages which are relayed via a beacon holder.

In one embodiment, establishment of an association comprises: requesting establishment of a direct radio link with said user equipment transmitting said beacon signal and awaiting confirmation of establishment of said requested direct radio link. Accordingly, a direct link may be established between a beacon signal transmitting user equipment and a non-beacon signal transmitting user. By requesting an association, a beacon signal transmitting user may be able to refuse creation of an association, if appropriate association criteria are not met, for example, a user may already have a full cluster list, reported strength of a possible direct link may not be sufficiently strong, a user may not be of an appropriate user type, and other similar establishment criteria.

In one embodiment, the establishment of an association comprises: receiving a request for establishment of a direct radio link with the user equipment transmitting said beacon signal and, if cluster or establishment criteria are met, transmitting confirmation of establishment of the requested direct radio link.

In one embodiment, the request comprises an indication of strength of received beacon signal at the receiving user equipment. Such an indication of strength may, for example, comprise an indication of path loss experienced.

In one embodiment, the establishment of an association comprises receiving information regarding user equipment which are included in the cluster list from the user equipment transmitting the beacon signal. Accordingly a user establishing a new association may receive information regarding all user equipment already having an association with a user transmitting a beacon signal. In one embodiment, each time a new association is made, or terminated, by a user transmitting a beacon signal, the user transmitting a beacon signal may take steps to transmit an indication of an updated cluster list to those other user equipment in the cluster list. In one embodiment, the method further comprises: transmitting information regarding user equipment which are included in said cluster list by user equipment transmitting said beacon signal.

In one embodiment, monitoring for receipt of a beacon signal from one of the other equipment comprises monitoring for a discontinuous beacon signal from one of the other equipment. Accordingly, it will be appreciated that a beacon signal may be continuously or discontinuously transmitted. Discontinuous transmission may result in power savings. Furthermore, in one embodiment, commencing transmission of a beacon signal comprises commencing transmission of a discontinuous beacon signal.

In one embodiment, monitoring for receipt of a beacon signal from one of the other equipment comprises monitoring for a beacon signal comprising a selected user type signature from one of the other equipment. In one embodiment, commencing transmission of a beacon signal comprises commencing transmission of a beacon signal comprising a selected user type signature. Aspects and embodiments may allow the encoding of a signature within a beacon to identify the "type" of D2D user to be indicated or the type of service a D2D user equipment requires. Each type of D2D capable user equipment may therefore use one or more of a set of signatures when transmitting a beacon. D2D capable user equipment in an emergency requiring help from public safety officer may be operable to broadcast an appropriate signature within its beacon. In some implementations, user equipment which do not belong to public safety officers are not operable to search for a public safety signature and therefore would not be operable to establish an unnecessary radio link with devices transmitting such signatures. Similarly, user equipment that does belong to a public safety officer may be operable to monitor for the presence of a suitable signature in a beacon and establish a D2D radio links only with user equipment transmitting such a suitable signature.

According to some embodiments, one or more D2D beacon signatures may be assigned to a type of user equipment or a service level and those beacon signature combinations may be used by user equipment to differentiate between levels of services or types of user equipment.

In one embodiment, the beacon signal comprises an indication of ranking and, in the event that more than one beacon signal is received at user equipment, the method further comprises assessing the indication of ranking associated with a beacon signal and notifying the user equipment transmitting the received beacon signal assessed to have a highest ranking of receipt of the beacon signal to establish an association with the user equipment transmitting the received beacon signal having the highest ranking.

According to some implementations, for example, a high ranking officer may be configured to operate such that an appropriate beacon signature is chosen to identify a user rank and D2D capable user equipment may operate such that the high ranking user equipment acts as a main point of contact for a group of user equipment belonging to a public safety group having an appropriate beacon signature. Beacon signature combinations may provide a mechanism for a high ranking officer to take a beacon role within a D2D group and allow other "lower" ranked existing beacons to be removed in preference to such a high ranking beacon.

In one embodiment, all beacon signatures within a group may have a common denominator. For example, a first portion of a beacon signature may be common and a remaining portion could differ across a group and be used to identify a "level" of user equipment operating within the group. User equipment may thus be operable to perform an initial search only in relation to a common portion so as to be able to recognise an appropriate group beacon. Once user equipment has identified a group based on detection of an appropriate common signature, it performs further beacon decoding on the beacon signature to determine a level of user equipment broadcasting such a beacon.

A second aspect provides a computer program product operable, when executed on a computer, to perform the method of the first aspect.

A third aspect provides user equipment operable to establish an association with other user equipment configured to communicate with other user equipment via a direct radio link within a wireless communications network; the user equipment comprising: monitoring logic configured to monitor for receipt of a beacon signal from the other user equipment; notification logic configured, if such a beacon signal is received, to notify the other user equipment transmitting the received beacon signal of receipt of the beacon signal, to establish an association with the user equipment transmitting the received beacon signal; and transmission and reception logic configured, if no beacon signal is received, to commence transmission of a beacon signal and monitor for receipt of a notification that the transmitted beacon signal has been received by the other user equipment to establish an association with the other user equipment responsible for transmission of the notification.

In one embodiment, the association comprises establishment of a direct radio link between the user equipment receiving a beacon signal and the user equipment transmitting the beacon signal.

In one embodiment, the association comprises membership of a user equipment cluster list maintained by the user equipment transmitting the beacon signal, the cluster list comprising a list of user.equipment with which the user equipment transmitting the beacon signal has a direct radio link.

In one embodiment, the user equipment comprises radio condition logic operable to exchange an indicator of radio condition of the established direct radio link between the user equipment receiving the beacon signal and the user equipment transmitting the beacon signal.

In one embodiment, if the transmission logic receives an instruction from user equipment transmitting the beacon signal to commence transmission of its own beacon signal, it is operable to to commence transmission of a beacon signal and monitor for receipt of a notification that the transmitted beacon signal has been received by the other user equipment to establish an association with the other user equipment responsible for transmission of the notification.

In one embodiment, the user equipment comprises determination logic operable to determine whether a received indicator of radio condition meets link maintenance criteria, and if not, to terminate an established association between user equipment receiving the beacon signal and the user equipment transmitting the beacon signal.

In one embodiment, the user equipment comprises communication logic operable to route communication between user equipment within the cluster list via direct radio link communication between itself and user equipment within a cluster list maintained by the user equipment transmitting the beacon signal.

In one embodiment, the user equipment comprises establishment logic operable to establish an association by requesting establishment of a direct radio link with user equipment transmitting the beacon signal and await confirmation of establishment of the requested direct radio link.

In one embodiment, the user equipment comprises establishment logic operable to receive a request for establishment of a direct radio link and, if cluster criteria are met, transmit confirmation of establishment of the requested direct radio link.

In one embodiment, the request comprises an indication of strength of received beacon signal at the receiving user equipment.

In one embodiment, the establishment logic is operable to receive information regarding user equipment which are included in the cluster list from the user equipment transmitting the beacon signal.

In one embodiment, the establishment logic is operable to transmit information regarding user equipment which are included in its cluster list to user equipment requesting establishment of an association

In one embodiment, the user equipment comprises monitoring logic operable to monitor for receipt of a beacon signal from one of the other user equipment by monitoring for a discontinuous beacon signal from one of the other equipment.

In one embodiment, the transmission logic is operable to commence transmission of a beacon signal by commencing transmission of a discontinuous beacon signal.

In one embodiment, the transmission logic is operable to commence transmission of a beacon signal if it determines that user equipment is receiving said beacon signal from one of said other user equipment at strength indicative of reaching an edge of beacon signal coverage.

In one embodiment, the user equipment comprises control logic operable, if said user equipment is transmitting a beacon signal, to assign or instruct a member of its cluster list to transmit a beacon signal.

In one embodiment, the monitoring logic is operable to monitor for receipt of a beacon signal from one of said other equipment by monitoring for a beacon signal comprising a selected user type signature from one of the other equipment.

In one embodiment, the transmission logic is operable to commence transmission of a beacon signal comprising a selected user type signature.

In one embodiment, the beacon signal comprises an indication of ranking and, in the event that more than one beacon signal is received at user equipment, the control logic is operable to assess the indication of ranking associated with a beacon signal and to notify the user equipment transmitting the received beacon signal assessed to have a highest ranking of receipt of the beacon signal to establish an association with the user equipment transmitting the received beacon signal having the highest ranking.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically user equipment configured to operate in a device to device communication mode in accordance with one embodiment;
Figure 2 illustrates schematically user equipment configured to operate in a device to device communication mode in accordance with one embodiment;
Figure 3 illustrates schematically possible device to device level users according to one embodiment; and
Figure 4 illustrates schematically possible device to device level user operation according to one embodiment.

### DESCRIPTION OF THE EMBODIMENTS

Components of a wireless telecommunications network typically include user equipment which roam through the wireless telecommunications network. Base stations, for example, eNodeBs, are provided which support areas of radio coverage. A number of such base stations are provided and are distributed geographically in order to provide a wide area of coverage to user equipment.

When user equipment is within an area of radio coverage served by a base station, communications may be established between the user equipment and the base station over associated radio links. Each base station typically supports a number of sectors within the geographical area of service.

Typically, a different antenna within a base station supports each associated sector. Each base station has multiple antennas. It will be appreciated that different network architectures maybe implemented, including, for example, UMTS systems, WiMAX systems,or a Long Term Evolution (LTE) system. In general, across these architectures, the functionality provided by network nodes described above is provided by network nodes which are named differently but have analogous functionality.

It has been recognised that there may be scenarios in which a base station is unable to offer radio coverage in a geographical region and that it may be desired to provide for communication between users in a network. In such a scenario it may be possible to implement Device to Device (D2D) communication. In a D2D mode, User Equipment (UE) may be operable to establish direct radio links with each other for communication. Since user equipment are relatively low powered transmit and receive devices, direct radio communication may rely on user equipment being within range of each other. D2D communication links may offer a reduction in a communication delay between user devices compared to using wireless network architecture solutions across short distances, since there is no need to pass messages between the user equipment via a network. Furthermore, if the user equipment are located such that they are close together, device to device communication techniques may also reduce user equipment transmission power leading to a saving of potentially limited battery power.

Although device to device communication techniques may offer some advantages, they may lead to unwanted or unexpected issues. One aspect of device to device techniques is a mechanism according to which one user equipment is operable to discover another user equipment within communication range.

It is possible to involve elements within a network such that one user equipment can provide one or more measurements to the network and the network is then operable to pair two user equipment determined by the network to be within a suitable range for communication over a direct link.

Involving network elements in such a set up process may increase both the signaling overhead and delay, since measurement reports and signalling messages need to be sent between the user equipment and each network element involved in establishing a device to device direct communication link.

It is also possible to allow user equipment to discover each other by allowing user equipment to transmit a beacon or pilot signal and allowing user equipment to operate such that they search for a beacon or pilot signal being broadcast by another user equipment. The configuration of user equipment beacon transmission is common such that all user equipment know how to search for such beacons.

The resource allocated to transmission of such a beacon may be configured by the network. Such an approach may support establishment of a direct radio link between user equipment more quickly than if establishment such a link is organized by the network.

A user equipment beacon may act as interference to other user equipment operating in an area. If there are many user equipment transmitting within an area, resultant interference caused by each user equipment beacon may cause user equipment beacons to be substantially undecodable.

Both approaches described above may require communication with a network for security purposes. It is, of course, possible for a hybrid approach to be adopted, such that the network is involved and broadcast of a beacon by user equipment is required. However, there may be scenarios where a network is unavailable, or user equipment have no available network coverage. Device to device communication links may be usefully established without the aid of network elements. One example of such a scenario is an emergency situation at a disaster region where network coverage may be lacking.

### Overview

Before discussing the embodiments in any more detail, first an overview will be provided. Aspects and embodiments described may group together user equipment capable of device to device communication in an area. Within such a group one, or a limited number of user equipment, are operable to transmit a beacon. Such a group is referred to as a D2D group, and the user equipment operable to transmit a beacon within a group are referred to as a beacon holder. Arrangement of user equipment to operate in such D2D groups may help reduce interference compared to a scenario in which many user equipment located close to each other autonomously start transmitting a beacon without any consideration of other user equipment operating in the vicinity. Aspects and embodiments may also provide flexibility for user equipment to automatically and/or autonomously join and leave a D2D group. Furthermore, embodiments may allow for a beacon holder to be automatically or autonomously changed if change conditions are met.

According to some aspects and embodiments, a designated beacon holder can maintain a list containing information regarding other user equipment within the group. Such information may, for example, include: UE ID, UE path loss and other similar parameters.

According to some implementations user equipment may belong to different groups or more than one group. In other words, groups may overlap.

According to some aspects and embodiments user equipment which discovers a beacon holder will also essentially "discover" all user equipment that belong to the group of the beacon holder. According to some embodiments a list maintained by a beacon holder can be passed from the beacon holder to a new group member on establishment of an initial D2D association, for example, by use of dedicated messages between user equipment on a direct radio link.

Various techniques and methods maybe used to manage and maintain a D2D group within a network, as described in more detail below.

### Selecting a Beacon Holder

According to one embodiment, user equipment which has been configured to operate in a device to device mode and which does not belong to any beacon group is operable to monitor for a possible beacon holder. If no beacon or pilot is received after a monitoring period, *T_{BH},* such user equipment may be operable to start transmission of a beacon. In other words, the user equipment becomes a beacon holder for a new D2D group.

In some embodiments, user equipment may be operable such that if a determined path loss between a non-beacon holder and a beacon holder within a group exceeds a predefined trigger threshold, the non-beacon holder can become another beacon holder. Such operation recognizes that user equipment which is not a member of a D2D group may simply not be within range of a beacon holder for that group, but that it may be within range of a non-beacon holder of that group.

According to some embodiments, a beacon holder may belong to the group of another beacon holder. In some embodiments, each beacon holder can accept members into its group. Such operation can allow formation of overlapping D2D groups. That is to say, user equipment may belong to more than one D2D group.

According to some embodiments, a beacon holder may be operable to assign or instruct another member of its group to be a beacon holder. Such operation may allow a beacon holder to relinquish its position as a beacon holder. Such operation may be useful, for example, if user equipment wishes to exit D2D operation and exit an established D2D group.

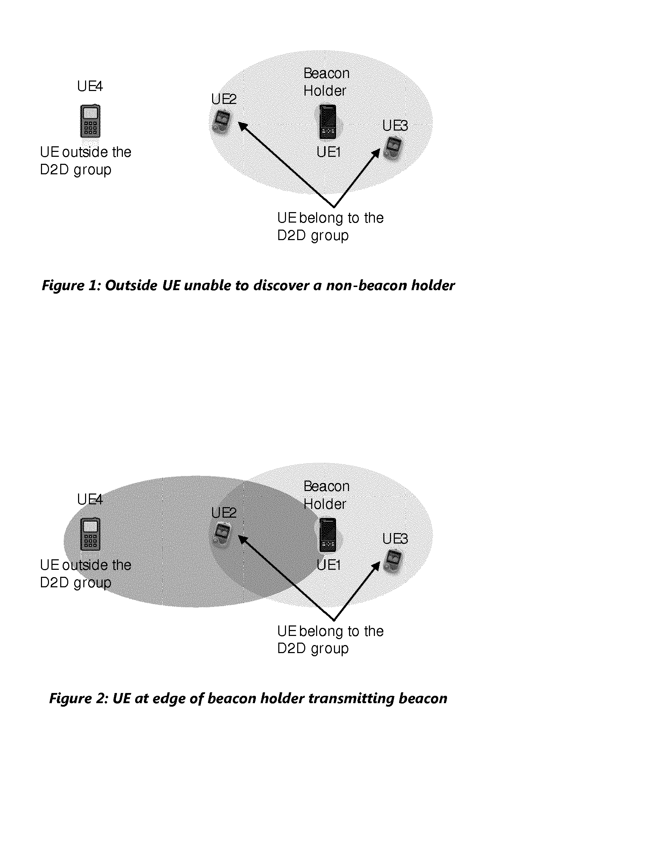

Figure 1 illustrates schematically user equipment configured to operate in a device to device communication mode in accordance with one embodiment. In the example shown in Figure 1, UE1 is a beacon holder for a D2D group and transmits a beacon which can be detected by other user equipment across the shaded coverage region shown. UE2 and UE3 lie within the coverage region and thus belong to the D2D group having UE1 as a beacon holder. UE4 lies outside the coverage region shown and is not a member of the D2D group having UE1 as a beacon holder.

Figure 2 illustrates schematically user equipment configured to operate in a device to device communication mode in accordance with one embodiment. In the example shown in Figure 2, UE1 is a beacon holder for a D2D group and transmits a beacon which can be detected by other user equipment across the shaded coverage region shown. UE2 and UE3 lie within the coverage region and thus belong to the D2D group having UE1 as a beacon holder. UE4 lies outside the coverage region shown and is not a member of the D2D group having UE1 as a beacon holder. UE2 is located at an edge of the coverage region provided by the beacon of UE1. UE4 is outside this D2D group and since it cannot detect the beacon from UE1, it is unable to discover UE2 even though UE2 is within communication range of UE4. By allowing user equipment at the edge of a coverage region to transmit a beacon, for example, UE2 in Figure 2, user equipment outside an existing D2D group, but not within range of an existing beacon holder, to discover user equipment within the existing D2D group. Figure 2 illustrates a coverage region supported by UE2 having been instructed by UE1 to transmit a beacon thereby allowing UE4 to detect UE2 and join a D2D group.

It will be appreciated that in some implementations UE4 is operable to transmit a beacon, having not been able to receive a beacon signal transmitted by UE1. In such an implementation UE2 may then have become a member of a D2D group owned by UE1 and a D2D group owned by UE4.

### Joining a D2D Group

If user equipment configured to operate in D2D mode discovers a beacon holder via reception of an appropriate beacon signal, it may, according to embodiments, be operable establish communication with the user equipment operating as a beacon holder. The user equipment which has discovered a beacon holder may, according to embodiments, request to join the D2D group supported by the beacon holder and, if such a request is accepted by the beacon holder, the user equipment may be operable to pass selected information to the beacon holder.

Implementations of aspects and embodiments may be such that a beacon holder may have a maximum number of user equipment within a group and therefore it may be operable to reject a request to join the group if the maximum number of group members has been reached.

As described previously, an existing beacon holder may be operable to join other D2D group on detection of reception of a beacon signal from another user equipment configured to operate in D2D mode.

### Exiting a D2D Group

According to some embodiments, a non-beacon holder within a group may continuously monitor a beacon transmitted by the beacon holder(s). If the quality of the beacon received by a group member falls below a selected communication quality threshold, the non-beacon holder may inform the relevant beacon holder. That beacon holder maybe operable to then remove the non-beacon holder from its group.

### Power management in D2D Mode

In some aspects and embodiments, a beacon holder may be operable to transmit a primary beacon according to a selected Discontinuous Transmission and/or Reception (DTX and DRX) cycle, *D*₁. User equipment within the group that are not beacon holders may be operable to transmit a secondary beacon which is recognized by the beacon holder. More than one secondary beacon can be used within a group. The secondary beacon may be transmitted at a lower rate with a selected DRX cycle *D*₂*.* where *D*₂ > *D*₁. Such a secondary beacon may be used by the beacon holder to determine whether to maintain or discard non-beacon holder user equipment within an existing D2D group. Transmission of beacons using discontinuous transmit or receive cycles may helps conserve the battery life of user equipment operable to transmit a beacon.

### Example 1

Two device to device capable user equipment, UE1 and UE2 are within communication range of each other. UE1 begins operating in D2D mode and is operable to search for possible D2D beacon signals. If UE1 fails to find any D2D beacon within a predetermined time period, UE1 is operable to initiate acting as a beacon holder and begins transmitting a beacon signal.

If UE2 begins operating in D2D mode, it is operable to search for a D2D beacon signal. In this instance, UE2 does that search and finds UE1. UE2 is then operable to establish a direct radio link with UE1 and to request to join the D2D group owned by UE1. In this embodiment, UE1 accepts the request and a D2D group is formed comprising UE1 and UE2.

Aspects and embodiments described may allow user equipment wishing to establish a device to device link with other user equipment to discover each other without each having to transmit a beacon signal. Aspects and embodiments may also allow a D2D link to be established if a network is unavailable or if there is no coverage in a geographical region. Nonetheless, aspects and embodiments may be used even if a network is available.

### Uses of Device to Device Communication

One possible use of D2D communication may be in relation to public safety. For example, in an emergency an officer may need to get help from other officers from the same service or other emergency services in his vicinity. Device to device communication methods may provide a useful service in such a scenario, particularly in places where coverage from a base station is limited or unavailable.

However, if the format of a user equipment D2D beacon is common across all user equipment, an officer may detect D2D user equipment which do not belong to other public safety officers and therefore D2D links may be established between an officer's user equipment and other general user equipment in the vicinity. Such undesired direct links waste resources and may delay aid or attendance of other officers at an emergency.

Aspects and embodiments may allow the encoding of a signature within a beacon to identify the "type" of D2D user to be indicated or the type of service a D2D user equipment requires. Each type of D2D capable user equipment may therefore use one or more of a set of signatures when transmitting a beacon. D2D capable user equipment in an emergency requiring help from public safety officer may be operable to broadcast an appropriate signature within its beacon. In some implementations, user equipment which do not belong to public safety officers are not operable to search for a public safety signature and therefore would not be operable to establish an unnecessary radio link with devices transmitting such signatures. Similarly, user equipment that does belong to a public safety officer may be operable to monitor for the presence of a suitable signature in a beacon and establish a D2D radio links only with user equipment transmitting such a suitable signature.

According to some embodiments, one or more D2D beacon signatures may be assigned to a type of user equipment or a service level and those beacon signature combinations may be used by user equipment to differentiate between levels of services or types of user equipment. In a scenario similar to that outlined above in which an emergency occurs, it is likely that a location of an emergency would be crowded by public safety personnel and possibly members of the public. By providing for different signature combinations, coordination between appropriate D2D capable user equipment may be improved.

According to some implementations, for example, a high ranking officer may be configured to operate such that an appropriate beacon signature is chosen to identify a user rank and D2D capable user equipment may operate such that the high ranking user equipment acts as a main point of contact for a group of user equipment belonging to a public safety group having an appropriate beacon signature. Beacon signature combinations may provide a mechanism for a high ranking officer to take a beacon role within a D2D group and allow other "lower" ranked existing beacons to be removed in preference to such a high ranking beacon.

In one embodiment, all beacon signatures within a group may have a common denominator. For example, a first portion of a beacon signature may be common and a remaining portion could differ across a group and be used to identify a "level" of user equipment operating within the group. User equipment may thus be operable to perform an initial search only in relation to a common portion so as to be able to recognise an appropriate group beacon. Once user equipment has identified a group based on detection of an appropriate common signature, it performs further beacon decoding on the beacon signature to determine a level of user equipment broadcasting such a beacon.

### Example 1

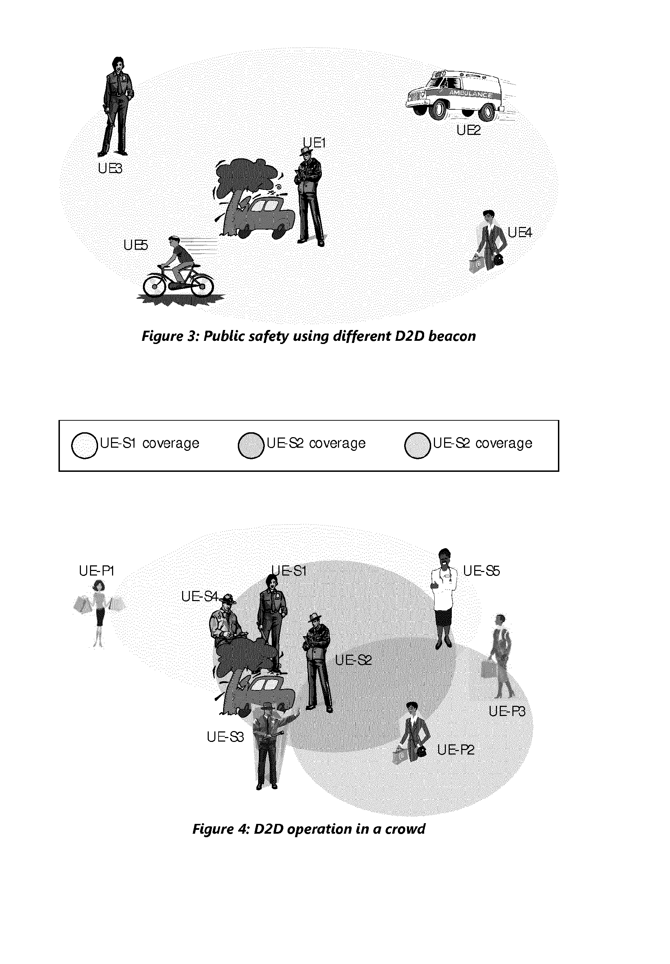

Figure 3 illustrates schematically possible device to device level users according to one embodiment. As shown in Figure 3, UE1, UE2 and UE3 belong to a public safety group. UE4 and UE5 belong to members of the public. On occurrence of an accident in an area with poor radio coverage from any network, witnessed by UE1; UE1 is operable to initiate D2D mode and to try to discover other D2D user equipment. UE1 operates to begins transmission of a beacon that has a beacon signature which belongs to those associated with a public safety group. UE1 may be operable to broadcast an emergency message along with the beacon.

UE2, UE3, UE4 and UE5 are within the radio range of the beacon being transmitted by UE1. However, only, UE2 and UE3 are operable to recognise the signature of the beacon transmitted by UE1 and thus detect UE1's beacon. UE2 and UE3 can decode the emergency message transmitted by UE1 therefore come to the aid of the holder of UE1.

UE4 may initiate D2D mode and broadcast a beacon having a beacon signature which belongings to a public group and which differs to the beacon signature used by UE1. UE5 may detect the beacon transmitted by UE4 and establish radio link with UE4.

### Example 2

Figure 4 illustrates schematically possible device to device level user operation according to one embodiment. In Figure 4, UE-S1, UE-S2, UE-S3, UE-S4 and UE-S5 belong to a public safety group whilst UE-P1, UE-P2 and UE-P3 belong to a public group. An accident occurs and members of the public safety group arrive at the scene together with members of the public.

A possible public safety beacon signature is shown in Table 1.

**Table 1: Beacon signature for public safety group**

| **Signature** | **Common Sequence** | **Ranking Sequence** |
|---|---|---|
| B1 | 10101010 | 00 |
| B2 | 10101010 | 11 |

Apossible beacon signature for the public (e.g. configured by an operator) is as shown in Table 2.

**Table 2: Beacon signature for the public**

| **Signature** | **Common Sequence** | **Ranking Sequence** |
|---|---|---|
| B3 | 1100110011 | N/A |

In the example shown, UE-S1 and UE-S2 are transmitting beacon B1 and B2 respectively. UE-P2 is transmitting beacon B3.

UE-S1 is a high ranking officer and acts as point of contact or group bearer, since all the other public safety user equipment are operable to successfully decode UE-S1's beacon signature and recognise that UE-S1 has a rank higher than their own. UE-S2 and UE-S4 are thus operable to establish a D2D radio link with UE-S1. UE-S4 is out of a coverage region supported by UE-S1 but forms a device to device radio link connection with UE-S2. Thus the public safety users have communication links with each other.

UE-P3 and UE-P2 form a device to device communication link.

UE-S5, which may be held, for example by a medic, arrives at the scene and needs to establish a radio link with the public safety group. UE-S5 is located as shown in Figure 4 within coverage of the beacon being transmitted by each of UE-S1, UE-S2 and UE-P2. UE-S5 is operable to search for beacons having the common signature assigned to the public-safety group (i.e. 10 10 10 10) and thereby avoids wasting resource trying to establish a device to device radio link with UE-P2. UE-S5 detects two signatures belonging to the public safety group, i.e., beacon B1 and B2. Since B1 is higher rank than B2, UE-S5 establishes a D2D radio link with UE-S1 which is transmitting beacon B1.

### Example 3

In a further embodiment, an accident occurs in a car that is equipped with a device capable of calling for help when it crashes. If such an accident occurs in an area with very poor radio coverage such a device may be capable of initiating a D2D communication mode. According to embodiments, such a device may operate to implement one of two methods:
According to the first method, the device may be operable to transmit a beacon having a signature indicative that such a device requires aid immediately, that is to say, the beacon signature may be indicative of an SOS. User equipment belonging to public safety personnel may be operable to detect such an emergency beacon signature and, if detected, would immediately raise an alert. Communication may be established between the public safety officer user equipment and the smart device to aid accident location.

According to a second method, the device may be operable to monitor for D2D beacons, especially those with a beacon signature belonging to a public safety group. Such monitoring may better preserve device battery power and may be performed in a DRX manner. Officers that perform regular checks within the region would always turn on their beacon so that any device in an emergency situation may detect and responds to an appropriate beacon.

Aspects and embodiments described may allow D2D capable user equipment to identify an appropriate D2D group of user equipment with which to establish communication links. Aspects and embodiments may allow coordination within a group of D2D user equipment in a manner which may avoid transmission of multiple interfering beacons.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of establishing an association between user equipment configured to communicate with other user equipment via a direct radio link within a wireless communications network; said method comprising:
monitoring, at one of said user equipment configured to communicate via a direct radio link, for receipt of a beacon signal from one of said other user equipment;
if such a beacon signal is received, notifying said user equipment transmitting said received beacon signal of receipt of said beacon signal to establish an association with said user equipment transmitting said received beacon signal; and
if no beacon signal is received, commencing transmission of a beacon signal and
monitoring for receipt of a notification that said transmitted beacon signal has been received by one of said other user equipment to establish an association with said other user equipment responsible for transmission of said notification.

2. A method according to claim 1,wherein said association comprises establishment of a direct radio link between said user equipment receiving a beacon signal and said user equipment transmitting said beacon signal.

3. A method according to claim 1 or claim 2, wherein said association comprises membership of a user equipment cluster list maintained by said user equipment transmitting said beacon signal, said cluster list comprising a list of user equipment with which said user equipment transmitting said beacon signal has a direct radio link.

4. A method according to any preceding claim, further comprising: exchanging an indicator of radio condition of said established direct radio link between said user equipment receiving a beacon signal and said user equipment transmitting said beacon signal.

5. A method according to claim 4, wherein if the indicator of radio condition of the established direct radio link between the user equipment receiving a beacon signal and the user equipment transmitting the beacon signal meets edge criteria, the user equipment receiving a beacon signal is instructed by the user equipment transmitting the beacon signal to commence transmission of its own beacon signal.

6. A method according to claim 4 or claim 5, comprising determining whether said indicator of radio condition fails to meet link maintenance criteria, and if not, terminating said established association between said user equipment receiving a beacon signal and said user equipment transmitting said beacon signal.

7. A method according to any preceding claim, wherein direct radio link communication between user equipment configured to communicate with other user equipment via a direct radio link within a cluster list maintained by said user equipment transmitting said beacon signal is routed between user equipment within said cluster list via said user equipment transmitting said beacon signal.

8. A method according to any preceding claim, wherein said establishment of an association comprises: requesting establishment of a direct radio link with said user equipment transmitting said beacon signal and awaiting confirmation of establishment of said requested direct radio link.

9. A method according to claim 8, wherein said request comprises an indication of strength of received beacon signal at said receiving user equipment.

10. A method according to any preceding claim, wherein said establishment of an association comprises receiving information regarding user equipment which are included in said cluster list from said user equipment transmitting said beacon signal.

11. A method according to any preceding claim, wherein a user equipment transmitting a beacon signal instructs a user with which it has established an association to commence transmission of a beacon signal.

12. A method according to any preceding claim, wherein monitoring for receipt of a beacon signal from one of said other equipment comprises monitoring for a beacon signal comprising a selected user type signature from one of said other equipment.

13. A method according to any preceding claim, wherein said beacon signal comprises an indication of ranking and, in the event that more than one beacon signal is received at user equipment, the method further comprises assessing said indication of ranking associated with a beacon signal and notifying said user equipment transmitting said received beacon signal assessed to have a highest ranking of receipt of said beacon signal to establish an association with said user equipment transmitting said received beacon signal having said highest ranking.

14. A computer program product operable, when executed on a computer, to perform the method of any one of claims 1 to 13.

15. User equipment operable to establish an association with other user equipment via a direct radio link within a wireless communications network; the user equipment comprising:
monitoring logic configured to monitor for receipt of a beacon signal from said other user equipment;
notification logic configured, if such a beacon signal is received, to notify said other user equipment transmitting the received beacon signal of receipt of said beacon signal,
to establish an association with said user equipment transmitting said received beacon signal; and
transmission and reception logic configured, if no beacon signal is received, to commence transmission of a beacon signal and monitor for receipt of a notification that said transmitted beacon signal has been received by said other user equipment to establish an association with said other user equipment responsible for transmission of said notification.

## Amended claims

### Amended claims in accordance with Rule 137(2) EPC.

**1.** A method of establishing an association between user equipment configured to communicate with other user equipment via a direct radio link within a wireless communications network; said method comprising:
monitoring, at one of said user equipment configured to communicate via a direct radio link, for receipt of a beacon signal from one of said other user equipment; if such a beacon signal is received, notifying said user equipment transmitting said received beacon signal of receipt of said beacon signal to establish an association with said user equipment transmitting said received beacon signal; and
if no beacon signal is received, commencing transmission of a beacon signal and monitoring for receipt of a notification that said transmitted beacon signal has been received by one of said other user equipment to establish an association with said other user equipment responsible for transmission of said notification; and a further step of a user equipment transmitting a beacon signal instructing a user equipment with which it has established an association to commence transmission of a beacon signal.

**2.** A method according to claim 1,wherein said association comprises establishment of a direct radio link between said user equipment receiving a beacon signal and said user equipment transmitting said beacon signal.

**3.** A method according to claim 1 or claim 2, wherein said association comprises membership of a user equipment cluster list maintained by said user equipment transmitting said beacon signal, said cluster list comprising a list of user equipment with which said user equipment transmitting said beacon signal has a direct radio link.

**4.** A method according to any preceding claim, further comprising: exchanging an indicator of radio condition of said established direct radio link between said user equipment receiving a beacon signal and said user equipment transmitting said beacon signal.

**5.** A method according to claim 4, wherein if the indicator of radio condition of the established direct radio link between the user equipment receiving a beacon signal and the user equipment transmitting the beacon signal meets edge criteria, that is if the user equipment receiving the beacon signal receives the signal at a strength indicative of reaching an edge of beacon signal coverage, the user equipment receiving the beacon signal is instructed by the user equipment transmitting the beacon signal to commence transmission of its own beacon signal.

**6.** A method according to claim 4 or claim 5, comprising determining whether said indicator of radio condition fails to meet link maintenance criteria, and if not, terminating said established association between said user equipment receiving a beacon signal and said user equipment transmitting said beacon signal.

**7.** A method according to any preceding claim, wherein direct radio link communication between user equipment configured to communicate with other user equipment via a direct radio link within a cluster list maintained by said user equipment transmitting said beacon signal is routed between user equipment within said cluster list via said user equipment transmitting said beacon signal.

**8.** A method according to any preceding claim, wherein said establishment of an association comprises: requesting establishment of a direct radio link with said user equipment transmitting said beacon signal and awaiting confirmation of establishment of said requested direct radio link.

**9.** A method according to claim 8, wherein said request comprises an indication of strength of received beacon signal at said receiving user equipment.

**10.** A method according to any preceding claim, wherein said establishment of an association comprises receiving information regarding user equipment which are included in said cluster list from said user equipment transmitting said beacon signal.

**11.** A method according to any preceding claim, wherein monitoring for receipt of a beacon signal from one of said other equipment comprises monitoring for a beacon signal comprising a selected user type signature from one of said other equipment.

**12.** A method according to any preceding claim, wherein said beacon signal comprises an indication of ranking and, in the event that more than one beacon signal is received at user equipment, the method further comprises assessing said indication of ranking associated with a beacon signal and notifying said user equipment transmitting said received beacon signal assessed to have a highest ranking of receipt of said beacon signal to establish an association with said user equipment transmitting said received beacon signal having said highest ranking.

**13.** A computer program product operable, when executed on a computer, to perform the method of any one of claims 1 to 12.

**14.** User equipment operable to establish an association with other user equipment via a direct radio link within a wireless communications network; the user equipment comprising:
monitoring logic configured to monitor for receipt of a beacon signal from said other user equipment;
notification logic configured, if such a beacon signal is received, to notify said other user equipment transmitting the received beacon signal of receipt of said beacon signal, to establish an association with said user equipment transmitting said received beacon signal; and
transmission and reception logic configured, if no beacon signal is received, to commence transmission of a beacon signal and monitor for receipt of a notification that said transmitted beacon signal has been received by said other user equipment to establish an association with said other user equipment responsible for transmission of said notification; and
control logic operable, if said user equipment is transmitting a beacon signal, to assign or instruct a user with which it has established an association to commence transmission of a beacon signal.
